# EUROPÄISCHE PATENTSCHRIFT

(11) **EP 1 142 394 B1**
(45) Veröffentlichungstag und Bekanntmachung des Hinweises auf die Patenterteilung: **21.04.2010**
(21) Anmeldenummer: 99965498.1
(22) Anmeldetag: 20.12.1999
(51) Int. Cl.: H04W 24/04

(54) **VERFAHREN ZUR TOLERIERUNG FEHLERHAFTER DATEN IN EINEM KOMMUNIKATIONSSYSTEM**
METHOD FOR TOLERATING DEFECTIVE DATA IN A COMMUNICATIONS SYSTEM
PROCEDE POUR RENDRE UN SYSTEME DE COMMUNICATION INSENSIBLE A DES DONNEES ERRONEES

(30) Priorität: 23.12.1998 DE 19859748
(43) Veröffentlichungstag der Anmeldung: 10.10.2001
(73) Patentinhaber: Giesecke & Devrient GmbH, 81677 München (DE)
(72) Erfinder: FRÖHLICH, Hans-Hermann, D-81673 München (DE); BORGS, Hans, Josef, D-83607 Holzkirchen (DE); VEDDER, Klaus, D-80801 München (DE)
(74) Vertreter: Klunker . Schmitt-Nilson . Hirsch
(86) Internationale Anmeldenummer: PCT/EP1999/010121
(87) Internationale Veröffentlichungsnummer: WO 2000/040047

(56) Entgegenhaltungen:
- EP-A- 0 481 714
- WO-A-98/09462
- US-A- 5 418 837
- US-A- 5 778 321

## Beschreibung

Die Erfindung betrifft ein Verfahren zur Tolerierung fehlerhafter Daten in einem Kommunikationssystem sowie ein entsprechendes Kommunikationssystem und einen Datenträger, welche zur Durchführung des Verfahrens geeignet sind.

In einem Kommunikationssystem werden zur Reduzierung der auszutauschenden Datenmengen temporäre Daten z.B. in Informationsträgern hinterlegt. Beispielsweise werden bei einem Mobilfunksystem die temporären Daten in der mobilen Komponente z.B. in einem nicht flüchtigen Speicher (EEPROM) einer Chipkarte zwischengespeichert. Wenn die mobile Komponente ihren Standort oder ihren Status wechselt, ändern sich die temporären Daten. Aufgrund der durch die EEPROM-Technik begrenzten Anzahl von Schreibvorgängen, können während des Betriebs Schreib- bzw. Lesefehler auftreten. Bei Mobilfunksystemen ist vorgesehen, bei einem Schreib/Lesedefekt der Chipkarte im Bereich der temporären Daten auf einen Hilfsbetrieb überzugehen, jedoch führt dieser bei einer größeren Anzahl von defekten Chipkarten zu einem erhöhten Signalisierungsaufwand im Netz mit einer wachsenden Gefahr der Überlast.

In diesem Zusammenhang ist beispielsweise aus der DE 4014151 C2 ein Verfahren zur Verlängerung der Benutzungsdauer von Informationsträgern mit EEPROM-Speichern bekannt. Das bekannte Verfahren schlägt z.B. vor, die Anzahl der Schreibvorgänge dadurch zu reduzieren, indem vor dem Einschreiben der Information in den EEPROM-Speicher ein Vergleich zwischen der im Speicher vorhandenen Information und der neu einzuschreibenden Information durchgeführt wird. Nur bei Ungleichheit der bereits gespeicherten temporären Information von der neu einzuschreibenden Information werden die entsprechenden Speicherzellen im EEPROM-Speicher überschrieben. Insbesondere bei Mobilfunkteilnehmern, die den größten Teil ihrer Funktelefongespräche innerhalb ihrer Heimatfunkzelle abwickeln, wobei sich die temporären Daten nicht ändern, kann durch das bekannte Verfahren die Zahl der Schreibvorgänge in den EEPROM-Speicher reduziert werden. Da bei Schreibvorgängen in einen EEPROM-Speicher Fehler nicht auszuschließen sind, wird bei dem bekannten Verfahren bei jedem Lesevorgang eine Paritätsprüfung durchgeführt, um festzustellen, ob eine Veränderung des Speicherinhalts seit dem letzten Schreibvorgang aufgetreten ist. Beim Feststellen eines entsprechenden Speicherfehlers wird eine Alarmmeldung ausgegeben und der Teilnehmer aufgefordert, den Informationsträger dem Systembetreiber zurückzugeben. Dies ist jedoch nachteilig für den Benutzer, da bei entsprechender Fehlermeldung dem Benutzer der Zugang zu der gewünschten Dienstleistung gesperrt wird, obwohl die Authentizität des Benutzers bzw. des Informationsträgers erfüllt ist.

Aus der US-PS 5,778,321 ist ein Verfahren für Mobilfunksysteme bekannt, bei dem bei einem fehlgeschlagenen Versuch auf Daten der SIM-Karte eines Mobilfunkendgeräts zuzugreifen, eine Fehlermeldung ausgegeben wird, welche entweder angibt, daß der Schreib- bzw. Lesevorgang erst nach mehreren Versuchen erfolgreich war bzw. insgesamt nicht erfolgreich war, wobei im zweiten Fall Informationen mit Hilfe eines voreingestellten Wertes, der zusätzlich in der Speicherkarte abgelegt werden muß, übertragen werden. In diesem Dokument wird weiter vorgeschlagen, ein automatisches Verfahren vorzusehen, welches den Ersatz des SIM-Modules veranlaßt.

Der Erfindung liegt die Aufgabe zugrunde, ein Verfahren vorzuschlagen, bei dem trotz des Auftretens von fehlerhaften temporären Daten die Kommunikation fortgeführt werden kann und dadurch der Zugang zu der gewünschten Dienstleistung möglich ist.

Die Aufgabe wird durch die im Patentanspruch 1 angegebenen Merkmale gelöst. Ein Kommunikationssystem sowie ein geeigneter Datenträger sind in den Ansprüchen 7 und 8 angegeben. Vorteilhafte Ausgestaltungen der Erfindung sind in den abhängigen Ansprüchen angegeben.

Erfindungsgemäß wird vorgeschlagen, daß bei einem Schreib-/Lesefehler der temporären Daten, die in einem nichtflüchtigen Speicher z.B. EEPROM eines Datenträgers, beispielsweise einer Chipkarte zwischengespeichert sind, anstelle einer Fehlermeldung oder der fehlerhaften temporären Daten In-itialwerte für den Sender bzw. Empfänger verwendet werden, die dann der weiteren Kommunikation zwischen Sender und Empfänger zugrundegelegt werden.

Es wird dabei die Eigenschaft genutzt, daß mobile Systemkomponenten, beispielsweise im Mobilfunkbereich, zumindest bei der Erstinbetriebnahme keine gültigen temporären Daten enthalten. Für diesen Fall ist die Möglichkeit vorgesehen, aus den Initialwerten die Systemzugehörigkeit und benötigte temporäre Dateien abzuleiten.

Durch die alternative oder zusätzliche Verwendung von Default-Werten erhält der Empfänger unmittelbar die Information, daß es sich nicht um eine Erstinbetriebnahme der Karte handelt, sondern die Ersatzdaten auf Grund eines Speicherfehlers übermittelt wurden.

Die Default-Werte enthalten alle notwendigen benutzerindividuellen Daten, die zum Betrieb des Senders und seiner Identifizierung gegenüber dem Empfänger notwendig sind.

Vorzugsweise können basierend auf den Initialwerten bzw. den Default-Werten die Systemzugehörigkeit und korrekte temporäre Daten abgeleitet bzw. entnommen werden, die bei der weiteren Kommunikation verwendet werden. Anhand des vom Sender an den Empfänger übertragenen Initialwertes erkennt dieser den Sender als "neuen" Systemteilnehmer an und ermittelt dessen Identität und meldet diesen korrekt im System an. Dadurch kann die Kommunikation aufrechterhalten werden und ein Zugriff auf die gewünschte Dienstleistung ist trotz der fehlerhaften temporären Daten möglich.

Durch das erfindungsgemäße Verfahren erfolgt die Kommunikation zwischen Sender und Empfänger zu jedem Zeitpunkt mit korrekten und gültigen Daten. Die Entscheidung, wie beim Auftreten eines Fehlers verfahren wird, beispielsweise Benachrichtigung des entsprechenden Teilnehmers, kann durch das erfindungsgemäße Verfahren zentral erfolgen, was den Wartungsaufwand reduziert. Die Erkennung von Schreib-/Lesefehlern im Bereich der temporären Daten erfolgt vorzugsweise durch den Datenträger selbst.

Der Sender kann zusätzlich mit einem Zähler ausgestattet sein, welcher die Häufigkeit von Fehlern mitzählt. Dadurch kann dem Empfänger eine Nachricht übermittelt werden, welche die Fehlerhäufigkeit angibt. Eine entsprechende Nachricht kann auch auf einer Anzeigeeinheit des Senders dargestellt werden, so daß seitens des Empfängers oder des Benutzers des Senders entsprechende Maßnahmen getroffen werden können.

Die Erfindung gibt weiterhin ein Kommunikationssystem bzw. einen Datenträger für ein Kommunikationssystem an, welcher einen Speicher zum Abspeichern von Initialdaten und temporärer Daten enthält. Der Datenträger ist dabei so ausgelegt, daß ein Schreib-/Lesefehler der im nichtflüchtigen Speicher gespeicherten temporären Daten erkannt wird. Im Falle der Fehlererkennung werden anstelle einer Fehlermeldung oder fehlerhafter temporärer Daten die Initialwerte des Datenträgers ausgegeben.

## Patentansprüche

1. Verfahren zur Tolerierung fehlerhafter Daten in einem Kommunikationssystem mit wenigstens einem Sender und einem Empfänger, die miteinander kommunizieren, **dadurch gekennzeichnet, daß** bei einem Schreib-/Lesefehler der in einem nichtflüchtigen Speicher eines Datenträgers gespeicherten temporären Daten anstelle einer Fehlermeldung oder der fehlerhaften temporären Daten Initialwerte für den Sender verwendet werden, wodurch die Kommunikation zwischen Sender und Empfänger fortgeführt werden kann, indem aus den Initialwerten die Systemzugehörigkeit und die benötigten temporären Daten abgeleitet werden.

2. Verfahren nach Anspruch 1, **dadurch gekennzeichnet, daß** der nichtflüchtige Speicher ein EEPROM ist.

3. Verfahren nach Anspruch 1 oder 2, **dadurch gekennzeichnet, daß** der Datenträger eine Chipkarte ist.

4. Verfahren nach Anspruch 1 bis 3, **dadurch gekennzeichnet, daß** der Sender einen Initialwert an den Empfänger überträgt und daß der Empfänger anschließend die Identität des Senders ermittelt und daraufhin den Sender im System als Teilnehmer anmeldet.

5. Verfahren nach Anspruch 1 bis 4, **dadurch gekennzeichnet, daß** der Datenträger einen Schreib-/Lesefehler im Bereich der temporären Daten erkennt.

6. Verfahren nach einem der Ansprüche 1 bis 5, **dadurch gekennzeichnet, daß** der Sender vorzugsweise im Datenträger einen Zähler enthält, der die Anzahl der Schreib-/ Lesefehler mitzählt.

7. Kommunikationssystem mit wenigstens einem Sender und einem Empfänger, die miteinander kommunizieren, wobei der Sender einen Datenträger zum Speichern von Initialdaten und temporären Dateien enthält, **dadurch gekennzeichnet, daß** der Datenträger ausgelegt ist, einen Schreib-/Lesefehler der in einem nichtflüchtigen Speicher gespeicherten temporären Daten zu erkennen und anstelle einer Fehlermeldung oder der fehlerhaften temporären Daten Initialwerte für den Sender auszugeben, wobei aus den Initialwerten die Systemzugehörigkeit und die benötigten temporären Daten ableitbar sind.

8. Tragbarer Datenträger zum Einsatz in einem Kommunikationssystem mit wenigstens einem Sender und einem Empfänger, die miteinander kommunizieren, wobei der Datenträger zum Speichern von Initialdaten und temporären Dateien im Sender angeordnet ist, **dadurch gekennzeichnet, daß** der Datenträger ausgelegt ist, einen Schreib-/ Lesefehler der in einem nichtflüchtigen Speicher gespeicherten temporären Daten zu erkennen und anstelle einer Fehlermeldung oder der fehlerhaften temporären Daten Initialwerte für den Sender auszugeben, wobei aus den Initialwerten die Systemzugehörigkeit und die benötigten temporären Daten ableitbar sind.

## Claims

1. A method for tolerating faulty data in a communication system having at least one transmitter and one receiver which communicate with each other, **characterized in that** upon a read/write error in the temporary data stored in a non-volatile memory of a data carrier, initial values for the transmitter are employed instead of an error message or the faulty temporary data, thereby permitting communication between transmitter and receiver to be continued by the system affiliation and the required temporary data being derived from said initial values.

2. The method according to claim 1, **characterized in that** the non-volatile memory is an EEPROM.

3. The method according to claim 1 or 2, **characterized in that** the data carrier is a chip card.

4. The method according to claims 1 to 3, **characterized in that** the transmitter transfers an initial value to the receiver, and the receiver subsequently ascertains the identity of the transmitter and thereupon logs the transmitter into the system as a subscriber.

5. The method according to claims 1 to 4, **characterized in that** the data carrier recognizes a read/write error in the area of the temporary data.

6. The method according to any of claims 1 to 5, **characterized in that** the transmitter contains preferably in the data carrier a counter which counts the number of read/write errors.

7. A communication system having at least one transmitter and one receiver which communicate with each other, the transmitter containing a data carrier for storing initial data and temporary files, **characterized in that** the data carrier is designed to recognize a read/write error in the temporary data stored in a non-volatile memory and to output initial values for the transmitter, instead of an error message or the faulty temporary data, whereby the system affiliation and the required temporary data are derivable from said initial values.

8. A portable data carrier for use in a communication system having at least one transmitter and one receiver which communicate with each other, the data carrier being disposed in the transmitter for storing initial data and temporary files, **characterized in that** the data carrier is designed to recognize a read/write error in the temporary data stored in a non-volatile memory and to output initial values for the transmitter, instead of an error message or the faulty temporary data, whereby the system affiliation and the required temporary data are derivable from said initial values.

## Revendications

1. Procédé de tolérance aux données défectueuses dans un système de communication avec au moins un émetteur et un récepteur qui communiquent entre eux, **caractérisé en ce que,** lors d'une erreur d'écriture/de lecture des données temporaires sauvegardées dans une mémoire non volatile d'un support de données, des valeurs initiales pour l'émetteur sont utilisées à la place d'un message d'erreur ou des données temporaires défectueuses, ce par quoi la communication entre l'émetteur et le récepteur peut être poursuivie, **en ce que** l'appartenance au système et les données temporaires requises sont déduites à partir des valeurs initiales.

2. Procédé selon la revendication 1, **caractérisé en ce que** la mémoire non volatile est une EEPROM.

3. Procédé selon la revendication 1 ou 2, **caractérisé en ce que** le support de données est une carte à puce.

4. Procédé selon la revendication de 1 à 3, **caractérisé en ce que** l'émetteur transmet une valeur initiale au récepteur et **en ce que** le récepteur détermine ensuite l'identité de l'émetteur et enregistre à la suite de cela l'émetteur dans le système en tant qu'usager.

5. Procédé selon la revendication de 1 à 4, **caractérisé en ce que** le support de données reconnaît une erreur d'écriture/de lecture dans la zone des données temporaires.

6. Procédé selon une des revendications de 1 à 5, **caractérisé en ce que** l'émetteur comprend de préférence dans le support de données un compteur qui compte le nombre d'erreurs d'écriture/de lecture.

7. Système de communication avec au moins un émetteur et un récepteur qui communiquent entre eux, l'émetteur comprenant un support de données pour sauvegarder des données initiales et des fichiers temporaires, **caractérisé en ce que** le support de données est conçu pour reconnaître une erreur d'écriture/de lecture des données temporaires sauvegardées dans une mémoire non volatile et diffuser des valeurs initiales pour l'émetteur à la place d'un message d'erreur ou des données temporaires défectueuses, l'appartenance au système et les données temporaires requises pouvant être déduites à partir des valeurs initiales.

8. Support de données portable destiné à être utilisé dans un système de communication avec au moins un émetteur et un récepteur qui communiquent entre eux, le support de données conçu pour sauvegarder des données initiales et des fichiers temporaires étant agencé dans l'émetteur, **caractérisé en ce que** le support de données est conçu pour reconnaître une erreur d'écriture/de lecture des données temporaires sauvegardées dans une mémoire non volatile et diffuser des valeurs initiales pour l'émetteur à la place d'un message d'erreur ou des données temporaires défectueuses, l'appartenance au système et les données temporaires requises pouvant être déduites à partir des valeurs initiales.
